(19) Europäisches Patentamt
European Patent Office
Office européen des brevets

(11) EP 4 317 319 A1

(12) EUROPEAN PATENT APPLICATION
published in accordance with Art. 153(4) EPC

(43) Date of publication:
07.02.2024 Bulletin 2024/06

(51) International Patent Classification (IPC):
C08L 79/08 (2006.01)        C08J 5/18 (2006.01)
C08G 73/10 (2006.01)

(21) Application number: 22885589.6

(22) Date of filing: 30.09.2022

(52) Cooperative Patent Classification (CPC):
C08G 73/10; C08J 5/18; C08L 79/08;
H01M 50/403; H01M 50/423; Y02E 60/10

(86) International application number:
PCT/CN2022/123066

(87) International publication number:
WO 2023/071706 (04.05.2023 Gazette 2023/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.11.2021 CN 202111285297

(71) Applicant: Contemporary Amperex Technology
Co., Limited
Ningde, Fujian 352100 (CN)

(72) Inventors:
• LI, Shida
Ningde, Fujian 352100 (CN)
• ZHONG, Qineng
Ningde, Fujian 352100 (CN)
• YANG, Limei
Ningde, Fujian 352100 (CN)
• WU, Yichen
Ningde, Fujian 352100 (CN)
• XUE, Yifan
Ningde, Fujian 352100 (CN)

(74) Representative: Gong, Jinping
CocreateIP
Neumarkterstr. 21
81673 München (DE)

(54) COMPOSITE POLYIMIDE SEPARATOR AND PREPARATION METHOD THEREFOR, AND SECONDARY BATTERY

(57) The present application provides a composite polyimide separator and a preparation method thereof, and a secondary battery. The preparation method of the composite polyimide separator comprises: providing a porous polyamic acid film; subjecting a diamine aqueous solution and an acyl chloride organic solution to an interfacial polymerization reaction on a surface of the porous polyamic acid film to obtain a composite polyamic acid separator; and placing the composite polyamic acid separator in vapor of an imidization reagent for imidization treatment to obtain the composite polyimide separator. In the present application, by controlling the parameters of the interfacial polymerization reaction, a composite polyamic acid separator with a dense surface, a loose bottom, and an adjustable surface pore size can be obtained.

FIG. 1

**Description**

**Cross-Reference to Related Applications**

The present application claims priority to Chinese patent application 202111285297.7 filed on November 1, 2021, and entitled "COMPOSITE POLYIMIDE SEPARATOR AND PREPARATION METHOD THEREOF, AND SECONDARY BATTERY," the entire content of which is incorporated herein by reference.

**Technical Field**

The present application relates to the technical field of batteries, and in particular to a composite polyimide separator and a preparation method thereof, and a secondary battery.

**Background Art**

As one of four core materials of a battery, a battery separator plays the role of isolating positive and negative electrodes, so that ions in an electrolyte solution can travel freely in the positive and negative electrodes, but electrons cannot pass through therein. The quality of the separator directly affects the safety performance indicators of the battery such as charge-discharge cycle life, flame retardancy and the like. Polyimide (PI) is a novel insulating material with good comprehensive performance. It has excellent thermal stability and mechanical performance, can be used for a long time under a condition of a temperature above 300°C and thus is an ideal battery separator material. However, a polyimide separator prepared in the prior art often easily causes a micro-short circuit in the positive and negative electrodes of the secondary battery, thereby causing safety accidents such as battery explosion and fire.

**Summary of the Invention**

The present application is made in view of the aforementioned problems, and an objective of the present application is to provide a composite polyimide separator and a preparation method thereof, and a secondary battery, aiming at improving the safety performance of the secondary battery.

In order to achieve the aforementioned objective, a first aspect of the present application provides a preparation method of a composite polyimide separator, comprising:

(a) providing a porous polyamic acid film;
(b) subjecting a diamine aqueous solution and an acyl chloride organic solution to an interfacial polymerization reaction on a surface of the porous polyamic acid film to obtain a composite polyamic acid separator; and
(c) placing the composite polyamic acid separator in vapor of an imidization reagent for an imidization reaction to obtain the composite polyimide separator.

Thus, in the present application, the polyamic acid separator with a composite structure can be obtained by conducting an interfacial polymerization reaction on the surface of the porous polyamic acid film, and then the composite polyamic acid separator is subjected to imidization treatment in the vapor of the imidization reagent to obtain a composite polyimide separator with a dense surface and a loose bottom. Since the imidization treatment is carried out by placing the composite polyamic acid separator in the vapor of the imidization reagent for reaction, rather than directly heating the separator at high temperature, under the catalytic action of the imidization reagent, the temperature of the imidization reaction can be greatly reduced, so that a composite polyimide separator with a smooth surface and having no cracks can be prepared. Furthermore, since the composite polyamic acid separator is imidized in the vapor of the imidization reagent, it can avoid direct contact with the liquid imidization reagent, so that the speed of the imidization reaction will not be too fast, which is beneficial to obtain a composite polyimide separator with uniform pore distribution.

In any embodiment, in the step (b), the time, temperature and number of times of the interfacial polymerization reaction are controlled, so that the pore size of the surface layer film of the composite polyimide separator is adjustable. By adjusting the time and temperature parameters of the interfacial polymerization reaction, and increasing the layer number of composite films by increasing the number of times of the interfacial polymerization reaction, the pore size of the surface layer film can be controlled within an appropriate range according to actual use requirements. By regulating the parameters of the interfacial polymerization reaction, it beneficial to form a dense surface layer film, so that the porosity and air permeability value of the separator can be improved, the puncture strength of the separator is enhanced, and thus the occurrence of micro-short circuits in the positive and negative electrodes of the secondary battery can be reduced, thereby improving the safety performance of the secondary battery.

In any embodiment, in the step (b), the time of the interfacial polymerization reaction is 1 s-120 s, and preferably 10 s-60 s; and/or

the temperature of the interfacial polymerization reaction is 10°C-45°C, and preferably 25°C-45°C; and/or
the number of times of the interfacial polymerization reactions is n ≥ 1.

By controlling the time, temperature and number of times of the interfacial polymerization reaction within a certain range, regulation of the pore size of the surface layer film of the composite polyimide separator can be realized, which is beneficial to form a composite polyimide separator with a dense surface and a loose bottom.

In any embodiment, in the step (b), the concentration of the diamine aqueous solution is $(0.01 \times 10^{-2})$-$(5 \times 10^{-2})$ g/mL, and preferably $(0.01 \times 10^{-2})$-$(2 \times 10^{-2})$ g/mL; and/or the concentration of the acyl chloride organic solution is $(0.005 \times 10^{-2})$-$(1 \times 10^{-2})$ g/mL, and preferably $(0.05 \times 10^{-2})$-$(0.5 \times 10^{-2})$ g/mL.

In any embodiment, in the step (b), the concentration of the diamine aqueous solution is $(0.01 \times 10^{-2})$-$(5 \times 10^{-2})$ g/mL, and preferably $(0.01 \times 10^{-2})$-$(2 \times 10^{-2})$ g/mL; and/or the concentration of the acyl chloride organic solution is $(0.005 \times 10^{-2})$-$(1 \times 10^{-2})$ g/mL, and preferably $(0.05 \times 10^{-2})$-$(0.5 \times 10^{-2})$ g/mL.

By controlling the concentration of the diamine aqueous solution and the acyl chloride organic solution in an appropriate range, it is beneficial to occurrence of the interfacial polymerization reaction.

In any embodiment, in the step (b), the diamine monomer in the diamine aqueous solution includes m-phenylenediamine or p-phenylenediamine; and/or the acyl chloride monomer in the acyl chloride organic solution includes benzenetetracarbonyl tetrachloride or biphenyl tetraacyl chloride.

In any embodiment, in the step (c), the temperature of the imidization reaction is 60°C-250°C, and preferably 65°C-120°C; and/or the time of the imidization reaction is 2 h-10 h, and preferably 4 h-8 h.

By controlling the temperature and time of the imidization reaction in an appropriate range, it is beneficial to form a vapor catalytic atmosphere of the imidization reagent, and facilitates controlling the speed of the imidization reaction in an appropriate range, thereby being able to prepare a composite polyimide separator with a smooth surface, having no cracks and having high porosity.

In any embodiment, in the step (c), the imidization reagent includes anhydride and tertiary amine, wherein the volume ratio of the anhydride to the tertiary amine is 1:(0.7-1.5).

By controlling the volume ratio of the anhydride to the tertiary amine within an appropriate range, an appropriate concentration of the imidization reagent can be obtained, which is conducive to improving the efficiency of the imidization reaction.

In any embodiment, the anhydride includes one or more of acetic anhydride, propionic anhydride, succinic anhydride, benzoic anhydride and phthalic anhydride; and/or the tertiary amine includes one or more of triethylamine, tributylamine, trimethylamine, dodecyldimethylamine and hexadecyldimethylamine.

In any embodiment, the method further comprises: subjecting the composite polyamic acid separator obtained in the step (b) to drying treatment, wherein,

the temperature of the drying treatment is 25°C-45°C, and preferably 25°C-35°C; and/or the time of the drying treatment is 50 min-70 min, and preferably 50 min-60 min.

In any embodiments, the step (a) comprises:

(a1) subjecting dianhydride and diamine to a polycondensation reaction in a polar solvent, and then adding a pore-forming agent and mixing well to obtain a polyamic acid film casting solution; and
(a2) coating the polyamic acid film casting solution on a substrate, and then immersing the substrate in a coagulation bath for a phase inversion reaction to obtain a porous polyamic acid film.

Through the phase inversion reaction, a polyamic acid film with higher porosity can be obtained.

In any embodiment, in the step (a1), based on the total mass of the dianhydride, the diamine, the polar solvent and the pore-forming agent of 100%, the sum of the mass of the dianhydride and the diamine is 10%-30%; preferably, the molar ratio of the diamine to the dianhydride is 1:(1.005-1.01); the mass of the polar solvent is 70%-90%; and the mass of the pore-forming agent is 1%-7%.

By controlling the mass ratio of the dianhydride, the diamine, the polar solvent and the pore-forming agent in an appropriate range, it is beneficial to obtain a polyamic acid film casting solution with appropriate porosity.

In any embodiment, the diamine includes at least one of 3,3'-dimethyl-4,4'-diaminodiphenylmethane and N,N'-bis(4-aminophenoxyphenyl)benzophenone tetraimide; and/or the dianhydride includes at least one of 3,3',4,4'-benzophenonetetracarboxylic dianhydride, 4,4'-triphenyl diether dianhydride, and pyromellitic anhydride; and/or a pore-forming agent includes polyvinylpyrrolidone or polyethylene glycol; preferably, the molecular weight of polyethylene glycol is 200-400; and/or the polar solvent includes at least one of N-methylpyrrolidone, N,N-dimethylformamide and tetrahydrofuran.

By selecting an appropriate diamine, dianhydride and polar solvent, it is beneficial to occurrence of the polycondensation reaction to obtain a polyamic acid solution; and by selecting an appropriate pore-forming agent, it facilitates formation of air bubbles with uniform shapes and sizes in the polyamic acid solution, which is conducive to relatively uniform shapes and sizes of the air holes contained in the subsequently formed porous polyamic acid film.

In any embodiment, in the step (a2), the thickness of the polyamic acid film casting solution coated on the substrate is 5 $\mu$m-200 $\mu$m, and preferably 40 $\mu$m-200 $\mu$m.

By controlling the coating thickness of the polyamic acid film casting solution within an appropriate range, it is beneficial to obtain a porous polyamic acid film with an appropriate thickness, and to keep the thickness of the finally obtained composite polyimide separator within an appropriate range.

In any embodiment, in the step (a2), the coagulation bath includes at least one of methanol, ethanol, n-butanol and water; and/or the temperature of the coagulation bath is 25°C-45°C, and preferably 25°C-30°C; and/or the time of the immersion is 30 min-180 min, and preferably 30 min-120 min.

By controlling the temperature and time of the coagulation bath in an appropriate range, it is beneficial to conduct a phase inversion reaction, and to obtain a porous polyamic acid film with an appropriate porosity.

A second aspect of the present application further provides a composite polyimide separator obtained by the preparation method described in the first aspect of the present application.

In any embodiment, the composite polyimide separator includes a bottom-layer base film, and at least one surface layer film disposed on a surface of the bottom-layer base film.

Thus, by utilizing the preparation method of the present application, a composite polyimide separator with a composite structure can be obtained. Unlike the integrated polyimide separator in the prior art, the pore size of the surface layer film of the composite polyimide separator in the present application can be regulated. By regulating the pore size of the surface layer film, a composite polyimide separator with uniform pore distribution can be obtained, while improving the porosity and air permeability of the separator, enhancing the puncture strength of the separator, reducing the occurrence of micro-short circuits in the positive and negative electrodes of the secondary battery, and improving the safety performance of the secondary battery.

A third aspect of the present application provides a secondary battery, which includes a composite polyimide separator prepared by the preparation method according to the first aspect of the present application or a composite polyimide separator according to the second aspect of the present application.

A fourth aspect of the present application provides a battery module including the secondary battery of the third aspect of the present application.

A fifth aspect of the present application provides a battery pack comprising the battery module of the fourth aspect of the present application.

A sixth aspect of the present application provides an electrical apparatus including at least one selected from the secondary battery of the third aspect of the present application, the battery module of the fourth aspect of the present application, or the battery pack of the fifth aspect of the present application.

**Description of Drawings**

Fig. 1 is a schematic structural diagram of a composite polyimide separator according to an embodiment of the present application.

Fig. 2 is a partial enlarged view of the surface layer film of the composite polyimide separator according to an embodiment of the present application.

Fig. 3 is a schematic structural diagram of an imidization reaction device according to an embodiment of the present application.

Fig. 4 is a schematic diagram of a secondary battery according to an embodiment of the present application.

Fig. 5 is an exploded diagram of a secondary battery according to an embodiment of the present application.

Fig. 6 is a schematic diagram of a battery module according to an embodiment the present application.

Fig. 7 is a schematic diagram of a battery pack according to an embodiment the present application.

Fig. 8 is an exploded view of the battery pack according to an embodiment of the present application shown in Fig. 7.

Fig. 9 is a schematic view of an electrical apparatus in which a secondary battery is used a power source according to an embodiment of the present application.

Description of reference numerals:

1 battery pack; 2 upper box; 3 lower box; 4 battery module; 5 secondary battery; 6 composite polyimide separator; 7 partial enlarged view of surface layer film of composite polyimide separator; 8 imidization reaction device. 51 case; 52 electrode assembly; 53 top cover assembly; 61 bottom-layer base film; 62 surface layer film; 81 imidization reagent. 621 partial enlarged view of surface layer film.

**Detailed Description**

Hereinafter, the embodiments of the composite polyimide separator and the preparation method thereof, the secondary battery, the battery module, the battery pack and the electrical apparatus of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, wherein both a and b are real numbers. For example, the numerical range "0-5" means that all real numbers between "0-5" have been listed herein, and "0-5" is just an abbreviated representation of the combination of these numerical values. Additionally, when it is stated that a certain parameter is an integer of $\geq 2$, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specified, the terms "include/including" and "comprise/comprising" mentioned in the present application may be open-ended or closed-ended. For example, the "including" and "comprising" may indicate that it is possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

The inventor has found during the research process that the polyimide separator prepared by the prior art usually needs to be subjected to high-temperature heat treatment during the imidization treatment process, and due to the high reaction temperature, it is easy to cause the problems of curling deformation and surface cracking of the separator. Furthermore, the polyimide separator prepared by the prior art is usually a single-layer integrated structure. During the preparation process, the surface pore size of the separator cannot be regulated according to the actual use requirements of the secondary battery. Th surface pore size of the separator prepared in such a manner is usually large, which easily causes a problem of internal short circuit of the positive and negative electrodes of the secondary battery.

In view of the aforementioned technical problems, the present application proposes a preparation method of a polyimide separator. A polyimide separator with a composite structure can be obtained by adopting an interfacial polymerization reaction in this method. The separator has a dense surface and a loose bottom, and the surface pore size and surface density of the separator can be regulated by controlling the parameters of the interfacial polymerization reaction. Furthermore, during the imidization treatment process, this method is carried out by placing the composite polyamic acid separator in the vapor of the imidization reagent for reaction, rather than directly heating the separator at high temperature, under the catalytic action of the imidization reagent, the temperature of the imidization reaction can be greatly reduced, so that a composite polyimide separator with a smooth surface and having no cracks can be prepared.

Composite polyimide separator

In one embodiment of the present application, a first aspect of the present application provides a preparation method of a composite polyimide separator, comprising:

S02. providing a porous polyamic acid film;
S04. subjecting a diamine aqueous solution and an acyl chloride organic solution to an interfacial polymerization reaction on a surface of the porous polyamic acid film to obtain a composite polyamic acid separator; and
S06. placing the composite polyamic acid separator in vapor of an imidization reagent for an imidization reaction to obtain the composite polyimide separator.

In the present application, the composite polyamic acid separator can be obtained by subjecting the diamine aqueous solution and the acyl chloride organic solution to the interfacial polymerization reaction on the surface of the porous polyamic acid film, and then the composite polyamic acid separator is placed in the vapor of the imidization reagent for the imidization reaction to obtain the polyimide separator with a composite structure.

In the preparation method of the present application, since the method of interfacial polymerization is adopted, a composite film with a multi-layer structure can be formed on the porous polyamic acid separator, and then subjected to imidization treatment to obtain a polyimide separator with a composite structure, which is different from an integrated single-layer separator in the prior art. Furthermore, in the preparation method of the present application, since the imidization treatment is carried out by placing the composite polyamic acid separator in the vapor of the imidization reagent for reaction, rather than directly heating the separator at high temperature, under the catalytic action of the imidization reagent, the temperature of the imidization reaction can be greatly reduced, so that a composite polyimide separator with a smooth surface and having no cracks can be prepared; and since the composite polyamic acid separator is imidized in the vapor of the imidization reagent, it can avoid direct contact of it with the liquid imidization reagent, so that the speed of the imidization reaction will not be too fast, which is beneficial to obtain a composite polyimide separator with uniform pore distribution.

In some embodiments, in the aforementioned step S04, the time, temperature and number of times of the interfacial polymerization reaction are controlled, so that the pore size of the surface layer film of the composite polyimide separator is adjustable.

In the preparation method of the present application, by adjusting the time and temperature parameters of the interfacial polymerization reaction, and increasing the layer number of composite films by increasing the number of times of the interfacial polymerization reaction, the pore size of the surface layer film can be controlled within an appropriate range according to actual use requirements. By regulating the parameters of the interfacial polymerization reaction, it beneficial to form a dense surface layer film, so that the porosity and air permeability value of the separator can be improved, the puncture strength of the separator is enhanced, and the occurrence of micro-short circuits in the positive and negative electrodes of the secondary battery is reduced, thereby improving the safety performance of the secondary battery.

In some embodiments, in the aforementioned step S04, the time of the interfacial polymerization reaction is 1 s-120 s, preferably 10 s-60 s, and more preferably 10 s-20 s. In the preparation method of the present application, by controlling the time of the interfacial polymerization reaction in an appropriate range, it is beneficial to form a polyamic acid separator with an appropriate thickness and a small surface pore size.

In some embodiments, in the aforementioned step S04, the temperature of the interfacial polymerization reaction is 10°C-45°C, preferably 25°C-45°C, and more preferably 25°C-35°C. In the preparation method of the present application, by controlling the temperature of the interfacial polymerization reaction in an appropriate range, it is beneficial to improve the speed of the interfacial polymerization reaction and make the reaction more complete, thereby forming a polyamic acid separator with a dense surface.

In some embodiments, in the aforementioned step S04, the number of times of the interfacial polymerization reactions is $n \geq 1$. In the preparation method of the present application, multiple layers of polyamic acid separators can be formed by conducting multiple times of interfacial polymerization reactions on the surface of the porous polyamic acid separator, and it is beneficial to realize the adjustability of the pore size of the surface layer film through the superposition of the multiple layers of polyamic acid separators.

In some embodiments, in the aforementioned step S04, the concentration of the diamine aqueous solution is $(0.01 \times 10^{-2})$-$(5 \times 10^{-2})$ g/mL, preferably $(0.01 \times 10^{-2})$-$(2 \times 10^{-2})$ g/mL, and more preferably $(1 \times 10^{-2})$-$(2 \times 10^{-2})$ g/mL.

In some embodiments, in the aforementioned step S04, the concentration of the acyl chloride organic solution is $(0.005 \times 10^{-2})$-$(1 \times 10^{-2})$ g/mL, preferably $(0.05 \times 10^{-2})$-$(0.5 \times 10^{-2})$ g/mL, and more preferably $(0.1 \times 10^{-2})$-$(0.5 \times 10^{-2})$ g/mL.

In the preparation method of the present application, by controlling the concentrations of the diamine aqueous solution and the acyl chloride organic solution in an appropriate range, it is beneficial to improve the speed of the interfacial polymerization reaction and make the reaction more complete, thereby forming a polyamic acid separator with a dense surface.

In some embodiments, in the aforementioned step S04, the diamine monomer in the diamine aqueous solution may include, but is not limited to, m-phenylenediamine or p-phenylenediamine, and preferably m-phenylenediamine.

In some embodiments, in the aforementioned step S04, the acyl chloride monomer in the acyl chloride organic solution may include, but is not limited to, benzenetetracarbonyl tetrachloride or biphenyl tetraacyl chloride, and preferably benzenetetracarbonyl tetrachloride.

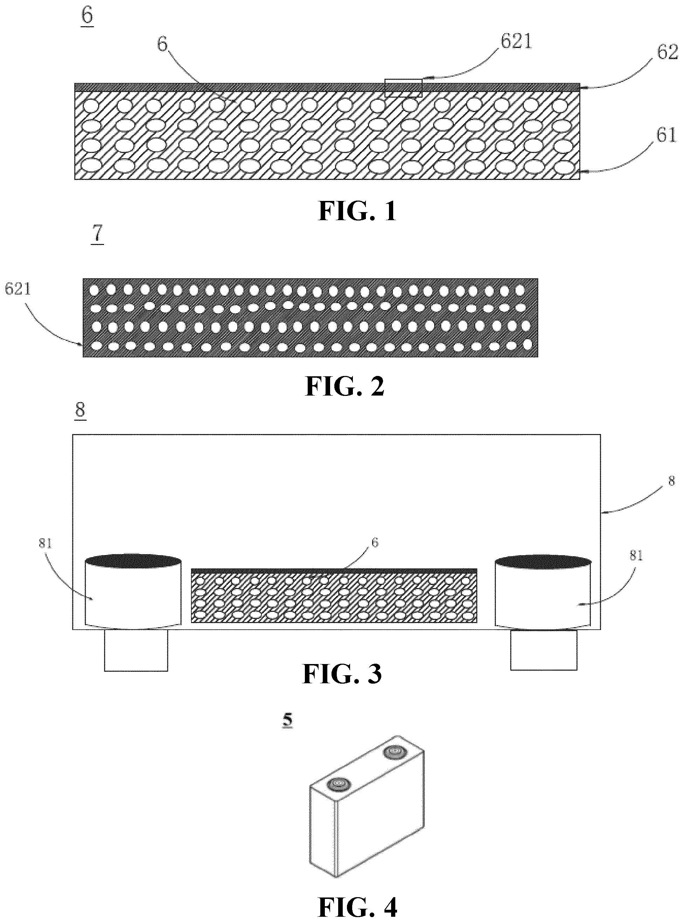

In some embodiments, as shown in Fig. 3, the composite polyamic acid separator is placed in an imidization reaction device, and subjected to imidization treatment in the vapor of the imidization reagent, wherein the temperature of the imidization reaction is 60°C-250°C, preferably 65°C-120°C, and more preferably 65°C-85°C.

In the preparation method of the present application, by controlling the temperature of the imidization reaction in an appropriate range, it is beneficial to form a vapor catalytic atmosphere of the imidization reagent, and it is beneficial to control the speed of the imidization reaction in an appropriate range, without causing the speed of the imidization reaction to be too fast, which is thus beneficial to obtain a composite polyamic acid separator with uniform pore distribution.

In some embodiments, in the aforementioned step S06, the time of the imidization reaction is 2 h-10 h, preferably 4 h-8 h, and more preferably 4 h-6 h.

In the preparation method of the present application, by controlling the time of the imidization reaction within an appropriate range, it is beneficial to obtain a composite polyimide separator with a smooth surface, having no cracks and having high porosity.

In some embodiments, in the aforementioned step S06, the imidization reagent includes anhydride and tertiary amine, wherein the volume ratio of the anhydride to the tertiary amine is 1:(0.7-1.5).

In the preparation method of the present application, by controlling the volume ratio of the anhydride to the tertiary amine within an appropriate range, a suitable concentration of the imidization reagent can be obtained, and thus the concentration of the formed vapor of the imidization reagent is also kept within an appropriate range, which is beneficial to rapid progress of the imidization reaction.

In some embodiments, the anhydride may include, but is not limited to, one or more of acetic anhydride, propionic anhydride, succinic anhydride, benzoic anhydride and phthalic anhydride.

Preferably, the anhydride can be selected from one of acetic anhydride or propionic anhydride. More preferably, acetic anhydride can be selected as the anhydride.

In some embodiments, the tertiary amine may include, but is not limited to, one or more of triethylamine, tributylamine, trimethylamine, dodecyldimethylamine and hexadecyldimethylamine.

Preferably, the tertiary amine can be selected from one or more of triethylamine, tributylamine and trimethylamine. More preferably, triethylamine can be selected as the tertiary amine.

In some embodiments, in the aforementioned preparation method, before the step S06, it may also optionally comprise subjecting the composite polyamic acid separator obtained in the aforementioned step S04 to drying treatment.

In some embodiments, drying treatment can be carried out by means known in the art, such as vacuum drying, airflow drying, spray drying, oven drying, and the like. Preferably, oven drying can be adopted.

In some embodiments, the temperature of the drying treatment is 25°C-45°C, and preferably 25°C-35°C.

In some embodiments, the time of the drying treatment is 50 min-70 min, and preferably 50 min-60 min.

In the preparation method of the present application, by controlling the temperature and time of the drying treatment within an appropriate range, the solvent on the surface of the composite polyamic acid separator obtained in the step S04 can be completely volatilized without affecting the structure and performance of the separator.

In some embodiments, the aforementioned step S02 can further comprise:

S022. subjecting dianhydride and diamine to a polycondensation reaction in a polar solvent, and then adding a pore-forming agent and mixing well to obtain a polyamic acid film casting solution; and
S024. coating the polyamic acid film casting solution on a substrate, and then immersing the substrate in a coagulation bath for a phase inversion reaction to obtain a porous polyamic acid film.

In the preparation method of the present application, a polyamic acid separator with an appropriate porosity can be prepared through a phase inversion reaction, thereby facilitating the formation of a composite polyimide separator.

In some embodiments, in the aforementioned step S022, based on the total mass of the dianhydride, the diamine, the polar solvent and the pore-forming agent of 100%, the sum of the mass of the dianhydride and the diamine is 10%-30%; preferably, the molar ratio of the diamine to the dianhydride is 1:(1.005-1.01); the mass of the polar solvent is 70%-90%; and the mass of the pore-forming agent is 1%-7%.

In the preparation method of the present application, by controlling the mass ratio of the dianhydride, the diamine, the polar solvent and the pore-forming agent in an appropriate range, it is beneficial to occurrence of a polycondensation reaction and it is beneficial to obtain a polyamic acid film casting solution with appropriate porosity.

In some embodiments, in the aforementioned step S022, the diamine may include, but is not limited to, at least one of 3,3'-dimethyl-4,4'-diaminodiphenylmethane and N,N'-bis(4-aminophenoxyphenyl)benzophenone tetraimide. Preferably, 3,3'-dimethyl-4,4'-diaminodiphenylmethane can be selected as the diamine.

In some embodiments, in the aforementioned step S022, the dianhydride may include, but is not limited to, at least one of 3,3',4,4'-benzophenonetetracarboxylic dianhydride, 4,4'-triphenyl diether dianhydride and pyromellitic anhydride. Preferably, 3,3',4,4'-benzophenonetetracarboxylic dianhydride can be selected as the dianhydride.

In some embodiments, in the aforementioned step S022, the pore-forming agent may include, but is not limited to, polyvinylpyrrolidone or polyethylene glycol.

Preferably, polyethylene glycol can be selected as the pore-forming agent. More preferably, the molecular weight of polyethylene glycol is 200-400.

In some embodiments, in the aforementioned step S022, the polar solvent may include, but is not limited to, at least one of N-methylpyrrolidone, N,N-dimethylformamide and tetrahydrofuran. Preferably, tetrahydrofuran can be selected as the polar solvent.

In the preparation method of the present application, by selecting appropriate diamine, dianhydride and polar solvent, it is beneficial to occurrence of the polycondensation reaction, so as to obtain a polyamic acid solution. By selecting an appropriate pore-forming agent, it is beneficial to form air bubbles with uniform shapes and sizes in the polyamic acid solution, thereby facilitating the formation of the porous polyamic acid separator described later, and the shape and size of the air bubbles contained in the porous polyamic acid separator are relatively uniform.

In some embodiments, in the aforementioned step S024, the thickness of the polyamic acid film casting solution coated on the substrate is 5 $\mu$m-200 $\mu$m, preferably 40 $\mu$m-200 $\mu$m, and more preferably 40 $\mu$m-100 $\mu$m.

In the preparation method of the present application, by controlling the coating thickness of the polyamic acid film casting solution within an appropriate range, it is beneficial to obtain a porous polyamic acid film with an appropriate thickness, and to keep the thickness of the finally obtained composite polyimide separator within an appropriate range.

In some embodiments, in the aforementioned step S024, the coagulation bath may include, but is not limited to, at least one of methanol, ethanol, n-butanol and water. Preferably, water can be selected as the coagulation bath.

In some embodiments, in the aforementioned step S024, the temperature of the coagulation bath is 25°C-45°C, and preferably 25-30°C.

In some embodiments, in the aforementioned step S024, the time of the immersion is 30 min-180 min, preferably 30 min-120 min, and more preferably 60 min-120 min.

In the preparation method of the present application, by controlling the temperature and time of the coagulation bath in an appropriate range, it is beneficial to conduct a phase inversion reaction, so as to obtain a porous polyamic acid separator with proper porosity and high tensile strength.

In some embodiments, the step S022 may further optionally comprise: vacuumizing and defoaming the polyamic acid solution obtained after addition of the pore-forming agent to obtain a polyamic acid film casting solution without air bubbles.

A second aspect of the present application further provides a composite polyimide separator obtained by any one of the preparation methods according to the first aspect of the present application.

In some embodiments, as shown in Figs. 1 and 2, the composite polyimide separator includes a bottom-layer base film 61, and at least one surface layer film 62 disposed on a surface of the bottom-layer base film, wherein the structure of the bottom-layer base film 61 is relatively loose, and the structure of the surface layer film 62 is relatively dense.

The composite polyimide separator of the present application is different from the single-layer integrated polyimide separator in the prior art. The pore size of the surface layer film of the composite separator can be regulated by controlling specific parameters in the corresponding preparation method. By adjusting the pore size of the surface layer film of the composite separator, a surface layer film with an appropriate pore size can be obtained while improving the uniformity of the pore distribution of the surface layer film. The composite polyimide separator of the present application has a structure of a dense surface and a loose bottom, and the separator has high porosity, air permeability and puncture strength, which can thus reduce the occurrence of micro-short circuits in the positive and negative electrodes of the secondary battery, and improve the safety performance of the secondary battery.

Moreover, the secondary battery, battery module, battery pack and an electrical apparatus of the present application will be described hereafter with appropriate reference to the accompanying drawings.

Secondary Battery

In an embodiment of the present application, a secondary battery is provided. Generally, the secondary battery includes a positive electrode plate, a negative electrode plate, an electrolyte and a separator. A composite polyimide separator prepared by any one of the preparation methods according to the first aspect of the present application or any one of the composite polyimide separators according to the second aspect of the present application is adopted as the separator.

During the charging and discharging process of the battery, active ions are intercalated and deintercalated back and forth between the positive electrode plate and the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode while allowing ions to pass through.

[Positive electrode plate]

The positive electrode plate includes a positive electrode current collector and a positive electrode film layer provided on at least one surface of the positive electrode current collector, where the positive electrode film layer comprises a positive electrode active material.

As an example, the positive electrode current collector has two opposite surfaces in its own thickness direction, and the positive electrode film layer is arranged on either or both of the opposite surfaces of the positive electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminum, aluminum alloy, nickel, nickel alloy, titanium, titanium alloy, silver and silver alloy, etc.) on the high molecular material substrate (e.g., polypropylene (PP), polyethylene terephthalate (PET), polybutylene terephthalate (PBT), polystyrene (PS), polyethylene (PE), etc.).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Here, examples of the lithium transition metal oxide may include, but are not limited to, at least one of a lithium-cobalt oxide (such as $LiCoO_2$), lithium-nickel oxide (such as $LiNiO_2$), lithium-manganese oxide (such as $LiMnO_2$ and $LiMn_2O_4$), lithium-nickel-cobalt oxide, lithium-manganese-cobalt oxide, lithium-nickel-manganese oxide, lithium-nickel-cobalt-manganese oxide (such as $LiNi_{1/3}Co_{1/3}Mn_{1/3}O_2$ (also abbreviated as NCM333), $LiNi_{0.5}Co_{0.2}Mn_{0.3}O_2$ (also abbreviated as NCM523), $LiNi_{0.5}Co_{0.25}Mn_{0.25}O_2$ (also abbreviated as NCM211), $LiNi_{0.6}Co_{0.2}Mn_{0.2}O_2$ (also abbreviated as NCM622), $LiNi_{0.8}Co_{0.1}Mn_{0.1}O_2$ (also abbreviated as NCM811)), lithium-nickel-cobalt-aluminum oxide (such as $LiNi_{0.85}Co_{0.15}Al_{0.05}O_2$) and modified compounds thereof. Examples of the lithium-containing phosphate with an olivine structure may include, but are not limited to, at least one of lithium iron phosphate (such as $LiFePO_4$ (also abbreviated as LFP)), a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotubes, graphene, and carbon nanofibers.

In some embodiments, the positive electrode plate can be prepared by: dispersing the aforementioned components for preparing the positive electrode plate, e.g., the positive electrode active material, the conductive agent, the binder and any other components in a solvent (e.g., N-methyl pyrrolidone) to form a positive electrode slurry; and coating the positive electrode slurry on a positive electrode current collector, followed by oven drying, cold pressing and the like procedures, to obtain the positive electrode plate.

[Negative electrode plate]

The negative electrode plate includes a negative electrode current collector and a negative electrode film layer arranged on at least one surface of the negative electrode current collector, wherein the negative electrode film layer includes a negative electrode active material.

As an example, the negative electrode current collector has two opposite surfaces in its own thickness direction, and the negative electrode film layer is arranged on either or both of the opposite surfaces of the negative electrode current collector.

In some embodiments, the negative electrode current collector can be a metal foil or a composite current collector. For example, a copper foil can be used as the metal foil. The composite current collector may include a high molecular material substrate layer and a metal layer formed on at least one surface of the high molecular material substrate layer. The composite current collector can be formed by forming a metal material (copper, copper alloy, nickel, nickel alloy, titanium, titanium alloy, silver and silver alloy, etc.) on the high molecular material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art can be used as the negative electrode active material. As an example, the negative electrode active material may include at least one of artificial graphite, natural graphite, soft carbon, hard carbon, a silicon-based material, a tin-based material, lithium titanate, and the like. The silicon-based material can be at least one selected from elemental silicon, a silicon oxide compound, a silicon-carbon composite, a silicon-nitrogen composite, and a silicon alloy. The tin-based material may be at least one selected from elemental tin, a tin oxide compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally include other adjuvants, for example, a thickener (e.g., sodium carboxymethylcellulose (CMC-Na)) and the like.

In some embodiments, the negative electrode plate can be prepared by: dispersing the aforementioned components for preparing the negative electrode plate, e.g., the negative electrode active material, the conductive agent, the binder and any other components in a solvent (e.g. deionized water) to form a negative electrode slurry; and coating the negative electrode slurry on a negative current collector, followed by oven drying, cold pressing and the like procedures, to obtain the negative electrode plate.

[Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent can be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally comprises an additive. For example, the additive may include a negative electrode film-forming additive, or a positive electrode film-forming additive, or may include an additive that capable of improving some performances of the battery, e.g., an additive for improving the overcharge performance of the battery, an additive for improving the high-temperature performance or low-temperature performance of the battery, and the like.

In some embodiments, the positive electrode plate, the negative electrode plate and the separator can be made into an electrode assembly by a winding process or a stacking process.

In some embodiments, the secondary battery may include an outer package. The outer package can be used to encapsulate the above-mentioned electrode assembly and electrolyte.

In some embodiments, the outer package of the secondary battery may be a hard housing, such as a hard plastic housing, an aluminum housing, a steel housing, etc. The outer package of the secondary battery may also be a soft package, such as a bag-type soft package. The material of the soft pack may be a plastic, and examples of the plastic include polypropylene, polybutylene terephthalate and polybutylene succinate, etc.

The present application has no particular limitation on the shape of the secondary battery, which can be cylindrical, square or any other shape. For example, Fig. 4 shows a secondary battery 5 with a square structure as an example.

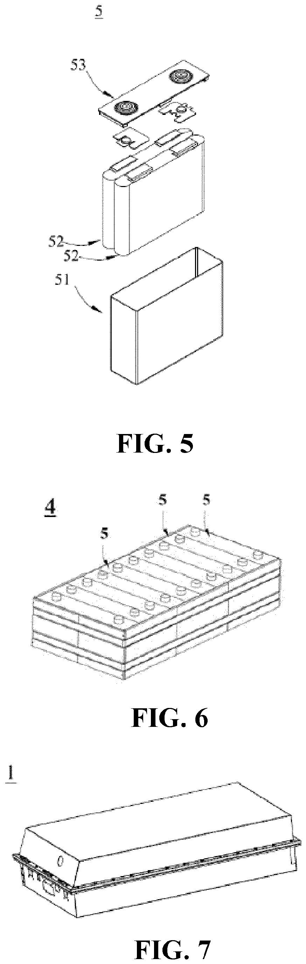

In some embodiments, referring to Fig. 5, the outer package may include a case 51 and a cover plate 53. The case 51 may include a bottom plate and a side plate connected to the bottom plate, and the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate and the separator can be subjected to a winding or stacking process to form a electrode assembly 52. The electrode assembly 52 is encapsulated within the accommodating cavity. The electrolyte solution impregnates the electrode assembly 52. The number of the electrode assemblies 52 included in the secondary battery 5 can be one or more, which can be selected by those skilled in the art according to specific practical requirements.

In some embodiments, the secondary batteries can be assembled into a battery module, and the number of the secondary batteries included in the battery module can be one or more, and the specific number can be selected by those skilled in the art according to the application and capacity of the battery module.

Fig. 6 shows a battery module 5 as an example. Referring to Fig. 6, in the battery module 4, multiple secondary batteries 5 may be sequentially arranged along a length direction of the battery module 4. Of course, they can also be arranged in any other way. The plurality of secondary batteries 5 may further be fixed by fasteners.

Optionally, the battery module 4 may further include a shell having an accommodating space in which the multiple secondary batteries 5 are accommodated.

In some embodiments, the aforementioned battery module may further be assembled into a battery pack, the number of battery modules contained in the battery pack may be one or more, and the specific number can be selected by those skilled in the art according to the use and capacity of the battery pack.

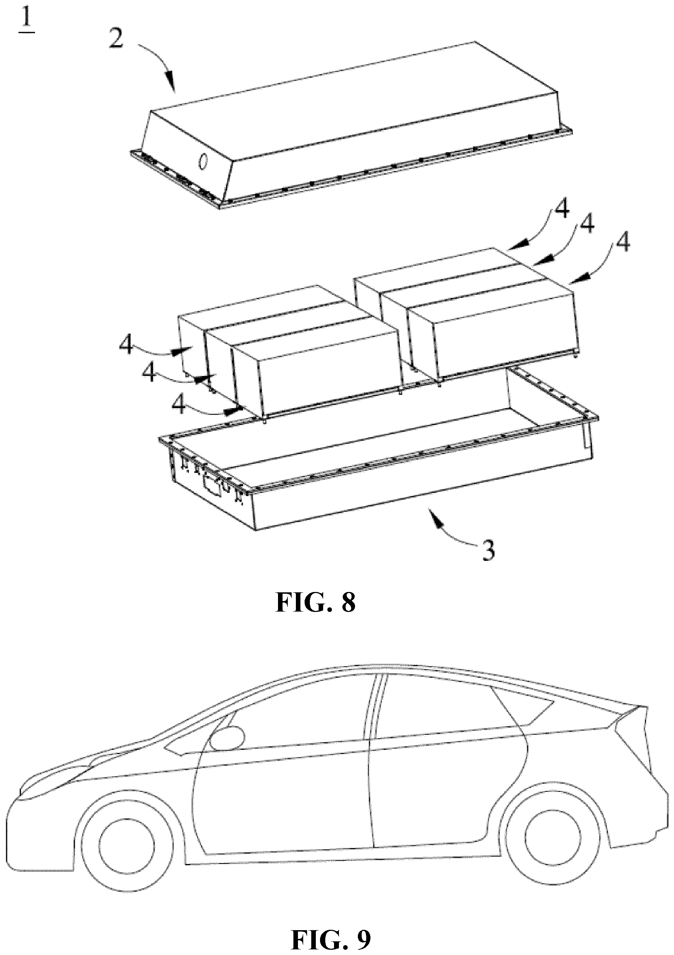

Figs. 7 and 8 show a battery pack 1 as an example. Referring to Figs. 7 and 8, the battery pack 1 may include a battery box and multiple battery modules 4 disposed in the battery box. The battery box includes an upper box body 2 and a lower box body 3, the upper box body 2 can cover the lower box body 3 to form a closed space for accommodating the battery modules 4. The plurality of battery modules 4 may be arranged in the battery box in any manner.

Additionally, the present application further provides an electrical apparatus comprising at least one of the secondary battery, battery module or battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

The secondary battery, the battery module, or the battery pack can be selected as the electrical apparatus according to the use requirements of the electrical apparatus.

Fig. 9 shows an electrical apparatus as an example. The electrical apparatus is a all-electric vehicle, a hybrid electric vehicle or a plug-in hybrid electric vehicle, and the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

Examples

Examples of the present application will be described hereinafter. The following examples are illustrative and only for explaining the present application, and should not be construed as limiting the present application. If no specific technology or condition is indicated in the examples, it shall be carried out according to the technology or condition described in the literature in the art or according to product specifications. Where manufacturers are not specified, the reagents or instruments used are conventional products and are commercially available.

Example 1

Preparation of composite polyimide separator

Into a three-necked flask containing 78 g of a solvent added was 7.69 g of dry 3,3'-dimethyl-4,4'-diaminodiphenylmethane (DMMDA) at a temperature of 0°C under a nitrogen atmosphere, stirred mechanically until the DMMDA was dissolved, then added with 12.31 g of dry 3,3',4,4'-benzophenonetetracarboxylic dianhydride (BTDA) and continually stirred mechanically for reaction for 12 h. Finally into the aforementioned reactants added was 2 g of PEG (200) and stirred for 3 h. A solution obtained from the aforementioned reaction was subjected to vacuum standing and defoaming to obtain a polyamic acid film casting solution.

The film casting solution was coated on a glass plate with a scraper, and a coating gap between the scraper and the glass plate was controlled to be 40 um. The scraped polyamic acid film was immersed in water at 30°C for phase inversion to form a coagulated film, and the immersion time was 120 min.

An aqueous m-phenylenediamine solution with a concentration of $(2 \times 10^{-2})$ g/mL and a solution of benzenetetracarbonyl tetrachloride in n-hexane with a concentration of $(0.1 \times 10^{-2})$ g/mL were formulated. Firstly the aqueous m-phenylenediamine solution was poured onto a surface of the coagulated polyamic acid film and allowed to stand for 3 min, the aqueous solution was poured off, and the surface was blow-dried with an air knife. Then the solution of benzenetetracarbonyl tetrachloride in n-hexane was poured onto the surface of the polyamic acid film and allowed to stand for 10 s to form a composite polyamic acid film. The reaction temperature of the aforementioned process was 25°C.

The composite polyamic acid film was dried in a drying oven at 25°C for 1 h, and then the dried film sheet was placed in an imidization reaction device as shown in Fig. 3, and reacted to obtain a composite polyimide separator. The temperature of the vapor of the imidization reaction was controlled at 120°C, the imidization reagent was a mixed reagent of acetic anhydride and triethylamine in a volume ratio of 1:1, and the time of the imidization reaction was 6 h.

Preparation of positive electrode plate

A positive electrode active material of $LiNi_{0.8}Co_{0.1}Mn_{0.1}O_2$, a conductive agent of acetylene black and a binder of PVDF were mixed according to a mass ratio of 96:2:2, added with a solvent of NMP and stirred until the system was homogeneous, so as to obtain a positive electrode slurry; the positive electrode slurry was evenly coated on a 12 $\mu$m thick aluminum foil as a positive electrode current collector, and then baked at 120°C for 1 h, and thereafter subjected to compacting and slitting sequentially to obtain a positive electrode plate.

Preparation of negative electrode plate

A negative electrode active material of graphite, a conductive agent of acetylene black, a thickener of CMC and a binder of SBR were mixed according to a mass ratio of 97:1:1:1, added with deionized water as a solvent, and stirred under the action of a vacuum stirrer until the system was stable and homogeneous, so as to obtain a negative electrode slurry; the negative electrode slurry was evenly coated on a copper foil as a negative electrode current collector, dried and then subjected to cold pressing to obtain a negative electrode plate.

Preparation of electrolyte solution

In a drying room, ethylene carbonate (EC), propylene carbonate (PC), and diethyl carbonate (DEC) were mixed at a weight ratio of EC:PC:DEC = 1: 1: 1 to obtain a mixed solvent, and then LiPF6 was dissolved in the mixed solvent uniformly to obtain a non-aqueous electrolyte solution. The concentration of LiPF6 was 1 mol/L.

Preparation of secondary battery

The positive electrode plate, the composite polyimide separator, and the negative electrode plate were laminated sequentially to prepare a battery cell. The composite polyimide separator was attached to the negative electrode plate, then put into an aluminum foil packaging bag, and then sequentially injected with the electrolyte solution and encapsulated to obtain a lithium metal battery with capacity of 1 Ah.

Example 2

The preparation process of the secondary battery was the same as that in Example 1, except that the time of the interfacial polymerization reaction was 20 s.

Example 3

The preparation process of the secondary battery was the same as that in Example 1, except that the time of the interfacial polymerization reaction was 40 s.

Example 4

The preparation process of the secondary battery was the same as that in Example 1, except that the temperature of the interfacial polymerization reaction was 10°C.

Example 5

The preparation process of the secondary battery was the same as that in Example 1, except that the temperature of the interfacial polymerization reaction was 45°C.

Example 6

The preparation process of the secondary battery was the same as that in Example 1, except that the concentration of the aqueous m-phenylenediamine solution was $(0.01 \times 10^{-2})$ g/mL.

Example 7

The preparation process of the secondary battery was the same as that in Example 1, except that the concentration of the aqueous m-phenylenediamine solution was $(5 \times 10^{-2})$ g/mL.

Example 8

The preparation process of the secondary battery was the same as that in Example 1, except that the concentration of the solution of benzenetetracarbonyl tetrachloride in n-hexane was $(0.005 \times 10^{-2})$ g/mL.

Example 9

The preparation process of the secondary battery was the same as that in Example 1, except that the concentration of the solution of benzenetetracarbonyl tetrachloride in n-hexane was $(0.5 \times 10^{-2})$ g/mL.

Example 10

The preparation process of the secondary battery was the same as that in Example 1, except that the concentration of the solution of benzenetetracarbonyl tetrachloride in n-hexane was $(1 \times 10^{-2})$ g/mL.

Example 11

The preparation process of the secondary battery was the same as that in Example 1, except that the interfacial polymerization reaction was carried out for 2 times.

Example 12

The preparation process of the secondary battery was the same as that in Example 1, except that the interfacial polymerization reaction was carried out for 4 times.

Example 13

The preparation process of the secondary battery was the same as that in Example 1, except that the volume ratio of acetic anhydride to triethylamine in the imidization reagent was 1:0.7.

Example 14

The preparation process of the secondary battery was the same as that in Example 1, except that the volume ratio of acetic anhydride to triethylamine in the imidization reagent was 1:1.5.

Example 15

The preparation process of the secondary battery was the same as that in Example 1, except that the temperature of the imidization treatment was 60°C.

Example 16

The preparation process of the secondary battery was the same as that in Example 1, except that the temperature of the imidization treatment was 250°C.

Example 17

The preparation process of the secondary battery was the same as that in Example 1, except that the time of the imidization treatment was 2 h.

Example 18

The preparation process of the secondary battery was the same as that in Example 1, except that the time of the imidization treatment was 10 h.

Example 19

The preparation process of the secondary battery was the same as that in Example 1, except that the coating gap between the scraper and the glass plate was 5 um.

Example 20

The preparation process of the secondary battery was the same as that in Example 1, except that the coating gap between the scraper and the glass plate was 200 um.

Example 21

The preparation process of the secondary battery was the same as that in Example 1, except that the temperature of the coagulation bath was 25°C.

Example 22

The preparation process of the secondary battery was the same as that in Example 1, except that the temperature of the coagulation bath was 45°C.

Example 23

The preparation process of the secondary battery was the same as that in Example 1, except that the time of the immersion was 30 min.

Example 24

The preparation process of the secondary battery was the same as that in Example 1, except that the time of the immersion was 180min.

Comparative Example 1

The preparation process of the secondary battery was the same as that in Example 1, except that the interfacial polymerization reaction was not carried not.

Comparative Example 2

The preparation process of the secondary battery was the same as that in Example 1, except that the imidization treatment was conventional heating, that was, the dried composite polyamic acid film was treated at 60°C for 0.5 h, at 100°C for 1 h, at 200°C for 1 h, at 250°C for 0.5 h, at 300°C for 0.5 h, and at 400°C for 1 h.

Comparative Example 3

The preparation process of the secondary battery was the same as that in Example 1, except that the imidization treatment was conventional soaking, that was, the dried composite polyamic acid film was soaked in a solution of the imidization reagent at 25°C for 6 h.

Testing section

Thickness test of composite polyimide separator

The thickness of the separator has a meaning well-known in the art, and can be tested by adopting methods known in the art, for example using a sub-micron micrometer (e.g., Mitutoyo 293-100 model, with an accuracy of 0.1 $\mu$m).

Tensile strength test of composite polyimide separator

Firstly, the separator is die-cut into 100 * 15 mm sheet stocks with a cutting die along a MD (length direction)/TD (width direction) respectively, and 5 duplicate samples are made in each direction. A tensile test is carried out with a high-speed iron tensile machine at a running speed of 100 mm/min, and the average values of 5 samples in the MD and TD are taken as the tensile strength in the MD and TD directions respectively.

$$\text{The tensile strength in the MD direction} = \text{a maximum force value in the MD direction}/(\text{thickness*width})/9.8$$

$$\text{The tensile strength in the TD direction} = \text{a maximum force value in the TD direction}/(\text{thickness*width})/9.8$$

Puncture strength test of composite polyimide separator

The puncture strength is tested according to the requirements of ASTM D4833-00e1. Using a high-speed iron tensile machine and a pogo pin with a diameter of 1 mm, the side of the separator with the smaller pore size was placed directly facing the tip of the pin upward, and the tension machine is started to puncture at a speed of 100 mm/min. The numerical value is read in N, and the results are measured for 5 times and averaged.

Air permeability value test of composite polyimide separator

A standard air permeability test method of the separator is adopted. The air permeability is defined as the time required for 100 ml of nitrogen to pass through a certain area of the separator under a certain pressure. The air permeability value is tested by an Oken type digital air permeability tester.

Porosity Test of composite polyimide separator

A block separator sample of 15 cm * 15 cm is taken, and tested for porosity with a weighing method. 5 samples are tested and averaged as the porosity. The specific calculation formula is:
The porosity of the separator = 1 - mass of the separator/(density * volume) = 1 - area density/(density * thickness), wherein the density of the polyimide separator is 0.95 g/cm$^3$.

Test of pore size od surface layer film of composite Polyimide separator

SEM is adopted to take photographs of the morphology of the surface and section of the separator, so as to measure the pore size of the separator.

Test of heat shrinkage rate of composite polyimide separator

The separator was die-cut into square sheet stocks of 100 mm × 50 mm with a cutting die, the sheet stocks are placed in an oven at 150°C, kept at this temperature for 30 min, and tested for the length change in the TD and MD directions. Finally an average value of 5 samples in the MD and TD directions respectively is taken as a respective heat shrinkage rate.

The heat shrinkage rate in the MD direction = (the dimension in the MD direction before heat-baking - the dimension in the MD direction after heat-baking)/the dimension in the MD direction before heat-baking * 100%.

The heat shrinkage rate in the TD direction = (the dimension in the TD direction before heat-baking - the dimension in the TD direction after heat-baking)/the dimension in the TD direction before heat-baking * 100%

Cycling performance test of secondary battery

Using conventional charging and discharging machine equipment, the battery cell is placed in an environment with a temperature of 25°C, charged with a constant current of 1C to 3.65 v, and then switched to charging with a constant voltage at a cut-off current of 0.05C, and discharged with a constant current of 1C to 2.5 V. A cyclic charge-discharge test is conducted with the aforementioned process until the capacity decays to 80% of the initial.

The relevant parameters of the composite polyimide separators of the aforementioned Examples 1-24 and Comparative Examples 1-3 are shown in Table 1 below.

Table 1: Parameter results of Examples 1-24 and Comparative Examples 1-3

| Item | interfacial polymerization reaction | | | | | imidization treatment | | | phase inversion reaction | | |
|---|---|---|---|---|---|---|---|---|---|---|---|
| | Time (s) | Temperature (°C) | Diamine Concentration of aqueous solution ($\times 10^{-2}$ g/mL) | Acyl chloride Concentration of organic solution ($\times 10^{-2}$ g/mL) | Number of times of interfacial polymerization reaction | Volume ratio of acetic anhydride to triethylamine | Temperature (°C) | Time (h) | Coating gap between the scraper and the glass plate ($\mu$m) | Temperature of coagulation bath (°C) | Time of immersion (min) |
| Example 1 | 10 | 25 | 2 | 0.1 | 1 | 1 | 120 | 6 | 40 | 30 | 120 |
| Example 2 | 20 | 25 | 2 | 0.1 | 1 | 1 | 120 | 6 | 40 | 30 | 120 |
| Example 3 | 40 | 25 | 2 | 0.1 | 1 | 1 | 120 | 6 | 40 | 30 | 120 |
| Example 4 | 10 | 10 | 2 | 0.1 | 1 | 1 | 120 | 6 | 40 | 30 | 120 |
| Example 5 | 10 | 45 | 2 | 0.1 | 1 | 1 | 120 | 6 | 40 | 30 | 120 |
| Example 6 | 10 | 25 | 0.01 | 0.1 | 1 | 1 | 120 | 6 | 40 | 30 | 120 |
| Example 7 | 10 | 25 | 5 | 0.1 | 1 | 1 | 120 | 6 | 40 | 30 | 120 |
| Example 8 | 10 | 25 | 2 | 0.005 | 1 | 1 | 120 | 6 | 40 | 30 | 120 |
| Example 9 | 10 | 25 | 2 | 0.5 | 1 | 1 | 120 | 6 | 40 | 30 | 120 |
| Example 10 | 10 | 25 | 2 | 1 | 1 | 1 | 120 | 6 | 40 | 30 | 120 |
| Example 11 | 10 | 25 | 2 | 0.1 | 2 | 1 | 120 | 6 | 40 | 30 | 120 |
| Example 12 | 10 | 25 | 2 | 0.1 | 4 | 1 | 120 | 6 | 40 | 30 | 120 |
| Example 13 | 10 | 25 | 2 | 0.1 | 1 | 1/0.7 | 120 | 6 | 40 | 30 | 120 |
| Example 14 | 10 | 25 | 2 | 0.1 | 1 | 1/1.5 | 120 | 6 | 40 | 30 | 120 |
| Example 15 | 10 | 25 | 2 | 0.1 | 1 | 1 | 60 | 6 | 40 | 30 | 120 |
| Example 16 | 10 | 25 | 2 | 0.1 | 1 | 1 | 250 | 6 | 40 | 30 | 120 |

EP 4 317 319 A1

(continued)

| Item | interfacial polymerization reaction | | | | | imidization treatment | | | phase inversion reaction | | |
|---|---|---|---|---|---|---|---|---|---|---|---|
| | Time (s) | Temperature (°C) | Diamine Concentration of aqueous solution ($\times 10^{-2}$ g/mL) | Acyl chloride Concentration of organic solution ($\times 10^{-2}$ g/mL) | Number of times of interfacial polymerization reaction | Volume ratio of acetic anhydride to triethylamine | Temperature (°C) | Time (h) | Coating gap between the scraper and the glass plate (μm) | Temperature of coagulation bath (°C) | Time of immersion (min) |
| Example 17 | 10 | 25 | 2 | 0.1 | 1 | 1 | 120 | 2 | 40 | 30 | 120 |
| Example 18 | 10 | 25 | 2 | 0.1 | 1 | 1 | 120 | 10 | 40 | 30 | 120 |
| Example 19 | 10 | 25 | 2 | 0.1 | 1 | 1 | 120 | 6 | 5 | 30 | 120 |
| Example 20 | 10 | 25 | 2 | 0.1 | 1 | 1 | 120 | 6 | 200 | 30 | 120 |
| Example 21 | 10 | 25 | 2 | 0.1 | 1 | 1 | 120 | 6 | 40 | 25 | 120 |
| Example 22 | 10 | 25 | 2 | 0.1 | 1 | 1 | 120 | 6 | 40 | 45 | 120 |
| Example 23 | 10 | 25 | 2 | 0.1 | 1 | 1 | 120 | 6 | 40 | 30 | 30 |
| Example 24 | 10 | 25 | 2 | 0.1 | 1 | 1 | 120 | 6 | 40 | 30 | 180 |
| Comparative Example 1 | None | None | None | None | None | 1 | 120 | 6 | 40 | 30 | 120 |
| Comparative Example 2 | 10 | 25 | 2 | 0.1 | 1 | None | - | 4.5 | 40 | 30 | 120 |
| Comparative Example 3 | 10 | 25 | 2 | 0.1 | 1 | 1 | 25 | 6 | 40 | 30 | 120 |

EP 4 317 319 A1

18

Moreover, the composite polyimide separators obtained in the aforementioned Examples 1-24 and Comparative Examples 1-3 and secondary batteries prepared therefrom are subjected to the performance test, and the test results are shown in Table 2 below.

Table 2: performance test results of Examples 1-24 and Comparative Examples 1-3.

| Item | Thickness of separator (μm) | Porosity of separator (%) | Pore size of surface layer film of separator (μm) | Tensile strength of separator | | Puncture strength of separator (N) | Air permeability of separator (s/in2 • 100cc) | Heat shrinkage rate of separator (150°C, 1 h) | | cycling performance test of battery |
|---|---|---|---|---|---|---|---|---|---|---|
| | | | | Machine direction (MPa) | Transverse direction (MPa) | | | Transverse direction TD (%) | Machine direction MD (%) | |
| Example 1 | 20 | 50 | 5 | 95 | 95 | 4.7 | 260 | 0.1% | 0.1% | 600 |
| Example 2 | 20 | 50 | 2 | 95 | 95 | 4.7 | 230 | 0.1% | 0.1% | 500 |
| Example 3 | 20 | 49 | 0.8 | 95 | 95 | 4.7 | 195 | 0.1% | 0.1% | 400 |
| Example 4 | 20 | 50 | 6 | 95 | 95 | 4.7 | 270 | 0.1% | 0.1% | 550 |
| Example 5 | 20 | 50 | 5 | 95 | 95 | 4.7 | 252 | 0.1% | 0.1% | 600 |
| Example 6 | 20 | 50 | 7 | 95 | 95 | 4.4 | 270 | 0.1% | 0.1% | 500 |
| Example 7 | 20 | 50 | 5 | 95 | 95 | 4.7 | 255 | 0.1% | 0.1% | 600 |
| Example 8 | 20 | 50 | 7 | 95 | 95 | 4.5 | 286 | 0.1% | 0.1% | 500 |
| Example 9 | 20 | 50 | 4 | 95 | 95 | 4.7 | 250 | 0.1% | 0.1% | 550 |
| Example 10 | 20 | 50 | 3 | 95 | 95 | 4.7 | 243 | 0.1% | 0.1% | 600 |
| Example 11 | 20 | 50 | 3 | 95 | 95 | 4.7 | 198 | 0.1% | 0.1% | 450 |
| Example 12 | 20 | 50 | 3 | 95 | 95 | 4.7 | 130 | 0.1% | 0.1% | 300 |
| Example 13 | 20 | 50 | 3 | 95 | 95 | 4.5 | 250 | 0.1% | 0.1% | 500 |
| Example 14 | 20 | 50 | 3 | 87 | 82 | 4.2 | 223 | 0.1% | 0.1% | 500 |
| Example 15 | 20 | 51 | 3 | 80 | 76 | 3.5 | 270 | 20% | 2.1% | 500 |
| Example 16 | 20 | 44 | 3 | 95 | 95 | 4.7 | 180 | 0.1% | 0.1% | 500 |
| Example 17 | 20 | 50 | 3 | 95 | 95 | 4 | 270 | 0.3% | 0.5% | 500 |
| Example 18 | 20 | 50 | 1 | 95 | 95 | 4.7 | 230 | 0.1% | 0.1% | 500 |
| Example 19 | 10 | 50 | 3 | 95 | 95 | 2 | 280 | 0.1% | 0.1% | 500 |
| Example 20 | 100 | 50 | 3 | 95 | 95 | 7 | 175 | 0.1% | 0.1% | 500 |
| Example 21 | 20 | 50 | 3 | 95 | 95 | 4.7 | 255 | 0.1% | 0.1% | 500 |

EP 4 317 319 A1

(continued)

| Item | Thickness of separator (μm) | Porosity of separator (%) | Pore size of surface layer film of separator (μm) | Tensile strength of separator | | Puncture strength of separator (N) | Air permeability of separator (s/in2 · 100cc) | Heat shrinkage rate of separator (150°C, 1 h) | | cycling performance test of battery |
|---|---|---|---|---|---|---|---|---|---|---|
| | | | | Machine direction (MPa) | Transverse direction (MPa) | | | Transverse direction TD (%) | Machine direction MD (%) | |
| Example 22 | 20 | 50 | 3 | 95 | 95 | 4.7 | 270 | 0.1% | 0.1% | 500 |
| Example 23 | 20 | 43 | 3 | 95 | 95 | 4.7 | 230 | 0.1% | 0.1% | 300 |
| Example 24 | 20 | 50 | 3 | 95 | 95 | 4.7 | 260 | 0.1% | 0.1% | 600 |
| Comparative Example 1 | 20 | 45 | 3 | 95 | 95 | 4.1 | 280 | 0.3% | 0.3% | 500 |
| Comparative Example 2 | 20 | 42 | 3 | 95 | 95 | 4.5 | 210 | 0.1% | 0.1% | 400 |
| Comparative Example 3 | 19 | 43 | 3 | 95 | 95 | 4 | 200 | 0.5% | 0.5% | 300 |

From the comparison of Examples 1-24 and Comparative Examples 1-3, it can be seen that the cycling performance of the secondary battery is improved by using the composite polyimide separator of the present application.

From the results of Examples 1-12 and Comparative Example 1, it can be seen that a separator with an adjustable pore size of a surface layer film can be obtained through the interfacial polymerization reaction, and the time, temperature, number of times and concentration of the reaction solution of the interfacial polymerization reaction all will affect the pore size of the surface layer film of the separator. Therefore, the pore size required in practical applications can be obtained by controlling the parameters of the interfacial polymerization reaction.

Furthermore, compared with Comparative Example 1, the puncture strength of the separators in Examples 1-12 is significantly higher than that of Comparative Example 1, and the heat shrinkage rate of the separator at 150°C is significantly lower than that of Comparative Example 1. Therefore, the composite polyimide separator prepared by the interfacial polymerization reaction in the present application has excellent performance.

From the results of Examples 13-18 and Comparative Examples 2-3, it can be seen that compared with the conventional heating and soaking treatment, the method of conducting imidization treatment by placing the separator in the imidization vapor in the present application has a faster reaction rate, and the resultant separator has higher porosity and better overall performance.

From the results of Examples 19-24 and Comparative Examples 1-3, it can be seen that in the phase inversion reaction, the coating gap between the scraper and the glass plate has a greater influence on the puncture strength of the separator, because the coating gap greatly affects the thickness of the bottom-layer base film in the separator.

It should be noted that the present application is not limited to the aforementioned embodiments. The above embodiments are merely exemplary, and embodiments having substantially the same technical idea and the same effects within the scope of the technical solutions of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

**Claims**

1.  A preparation method of a composite polyimide separator, comprising:

    (a) providing a porous polyamic acid film;
    (b) subjecting a diamine aqueous solution and an acyl chloride organic solution to an interfacial polymerization reaction on a surface of the porous polyamic acid film to obtain a composite polyamic acid separator; and
    (c) placing the composite polyamic acid separator in vapor of an imidization reagent for an imidization reaction to obtain the composite polyimide separator.

2.  The preparation method according to claim 1, wherein in the step (b), the time, temperature and number of times of the interfacial polymerization reaction are controlled, so that a pore size of a surface layer film of the composite polyimide separator is adjustable.

3.  The preparation method according to claim 2, wherein in the step (b), the time of the interfacial polymerization reaction is 1 s-120 s, and preferably 10 s-60 s; and/or

    the temperature of the interfacial polymerization reaction is 10°C-45°C, and preferably 25°C-45°C; and/or
    the number of times of the interfacial polymerization reactions is $n \geq 1$.

4.  The preparation method according to claim 2, wherein in the step (b), the concentration of the diamine aqueous solution is $(0.01 \times 10^{-2})$-$(5 \times 10^{-2})$ g/mL, and preferably $(0.01 \times 10^{-2})$-$(2 \times 10^{-2})$ g/mL; and/or
    the concentration of the acyl chloride organic solution is $(0.005 \times 10^{-2})$-$(1 \times 10^{-2})$ g/mL, and preferably $(0.05 \times 10^{-2})$-$(0.5 \times 10^{-2})$ g/mL.

5.  The preparation method according to claim 2, wherein in the step (b), a diamine monomer in the diamine aqueous solution comprises m-phenylenediamine or p-phenylenediamine; and/or
    an acyl chloride monomer in the acyl chloride organic solution comprises benzenetetracarbonyl tetrachloride or biphenyl tetraacyl chloride.

6.  The preparation method according to claim 2, wherein in the step (c), the temperature of the imidization reaction is 60°C-250°C, and preferably 65°C-120°C; and/or
the time of the imidization reaction is 2 h-10 h, and preferably 4 h-8 h.

7. The preparation method according to claim 2, wherein in the step (c), the imidization reagent comprises anhydride and tertiary amine,
wherein the volume ratio of the anhydride to the tertiary amine is 1:(0.7-1.5).

8. The preparation method according to claim 7, wherein the anhydride comprises one or more of acetic anhydride, propionic anhydride, succinic anhydride, benzoic anhydride and phthalic anhydride; and/or
the tertiary amine comprises one or more of triethylamine, tributylamine, trimethylamine, dodecyldimethylamine and hexadecyldimethylamine.

9. The preparation method according to claim 2, further comprising: subjecting the composite polyamic acid separator obtained in the step (b) to drying treatment, wherein,

   the temperature of the drying treatment is 25°C-45°C, and preferably 25°C-35°C; and/or
   the time of the drying treatment is 50 min-70 min, and preferably 50 min-60 min.

10. The preparation method according to claim 2, wherein the step (a) comprises:

    ($a_1$) subjecting dianhydride and diamine to a polycondensation reaction in a polar solvent, and then adding a pore-forming agent and mixing well to obtain a polyamic acid film casting solution; and
    ($a_2$) coating the polyamic acid film casting solution on a substrate, and then immersing the substrate in a coagulation bath for a phase inversion reaction to obtain the porous polyamic acid film.

11. The preparation method according to claim 10, wherein in the step ($a_1$), based on the total mass of the dianhydride, diamine, polar solvent and pore-forming agent of 100%,

    the sum of the mass of the dianhydride and the diamine is 10%-30%; preferably, the molar ratio of the diamine to the dianhydride is 1:(1.005-1.01);
    the mass of the polar solvent is 70%-90%; and
    the mass of the pore-forming agent is 1%-7%.

12. The preparation method according to claim 11, wherein the diamine comprises at least one of 3,3'-dimethyl-4,4'-diaminodiphenylmethane and N,N'-bis(4-aminophenoxyphenyl)benzophenone tetraimide; and/or

    the dianhydride comprises at least one of 3,3',4,4'-benzophenonetetracarboxylic dianhydride, 4,4'-triphenyl diether dianhydride and pyromellitic anhydride, and/or
    the pore-forming agent comprises polyvinylpyrrolidone or polyethylene glycol; preferably, the molecular weight of the polyethylene glycol is 200-400; and/or
    the polar solvent comprises at least one of N-methylpyrrolidone, N,N-dimethylformamide and tetrahydrofuran.

13. The preparation method according to claim 10, wherein in the step ($a_2$), the thickness of the polyamic acid film casting solution coated on the substrate is 5 $\mu$m-200 $\mu$m, and preferably 40 $\mu$m-200 $\mu$m.

14. The preparation method according to claim 10, wherein in the step ($a_2$), the coagulation bath comprises at least one of methanol, ethanol, n-butanol and water; and/or

    the temperature of the coagulation bath is 25°C-45°C, and preferably 25-30°C; and/or
    the time of the immersion is 30 min-180 min, and preferably 30 min-120 min.

15. A composite polyimide separator prepared by adopting the preparation method according to any one of claims 1-14.

16. The composite polyimide separator according to claim 15, wherein the separator comprises a bottom-layer base film, and
at least one surface layer film disposed on a surface of the bottom-layer base film.

17. A secondary battery comprising a composite polyimide separator prepared by the preparation method according to any one of claims 1-14 or the composite polyimide separator according to any one of claims 15-16.

18. A battery module comprising the secondary battery according to claim 17.

19. A battery pack comprising the battery module according to claim 18.

20. An electrical apparatus comprising at least one selected from the secondary battery according to claim 17, the battery module according to claim 18 or the battery pack according to claim 19.

**FIG. 1**

**FIG. 2**

**FIG. 3**

**FIG. 4**

5

53

52
52

51

**FIG. 5**

4

5

5

5

5

**FIG. 6**

1

0

**FIG. 7**

**FIG. 8**

**FIG. 9**

## INTERNATIONAL SEARCH REPORT

| International application No. |
|---|
| **PCT/CN2022/123066** |

### A. CLASSIFICATION OF SUBJECT MATTER

C08L 79/08(2006.01)i; C08J 5/18(2006.01)i; C08G 73/10(2006.01)i

According to International Patent Classification (IPC) or to both national classification and IPC

### B. FIELDS SEARCHED

Minimum documentation searched (classification system followed by classification symbols)

C08L; C08J; C08G; H01M

Documentation searched other than minimum documentation to the extent that such documents are included in the fields searched

Electronic data base consulted during the international search (name of data base and, where practicable, search terms used)

CNABS, WPABSC; CNTXT; CJFD; ENTXTC; VEN; CNKI; Elsevier Science: 亚胺化, 二胺, 蒸汽, 酰氯, 聚酰胺酸, 聚酰亚胺, 电池, 隔膜, diamine, chloride, polyimide, film, membrane, battery, polyamide acid, steam

### C. DOCUMENTS CONSIDERED TO BE RELEVANT

| Category* | Citation of document, with indication, where appropriate, of the relevant passages | Relevant to claim No. |
|---|---|---|
| Y | CN 110828750 A (SOUNDON NEW ENERGY TECHNOLOGY CO., LTD.) 21 February 2020 (2020-02-21) description, paragraphs [0006]-[0022] | 1-20 |
| Y | CN 111234278 A (CHONGQING UNIVERSITY OF ARTS AND SCIENCES) 05 June 2020 (2020-06-05) claims 1-9 | 1-20 |
| Y | CN 103172891 A (HUAWEI POLYIMIDE CO., LTD. et al.) 26 June 2013 (2013-06-26) description, paragraphs [0006]-[0020] and [0026] | 1-20 |
| Y | CN 105944579 A (OCEAN UNIVERSITY OF CHINA) 21 September 2016 (2016-09-21) claims 1-10, and description, paragraphs [0044] and [0047] | 1-20 |
| Y | JP 2004139867 A (NITTO DENKO CORPORATION) 13 May 2004 (2004-05-13) description, preparation example 3, embodiment 3, and table 1 | 1-20 |
| A | TW 201813993 A (ASAHI CHEMICAL IND.) 16 April 2018 (2018-04-16) entire document | 1-20 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 December 2022** | **05 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/123066**

| Patent document cited in search report | | | Publication date (day/month/year) | Patent family member(s) | | | Publication date (day/month/year) |
|---|---|---|---|---|---|---|---|
| CN | 110828750 | A | 21 February 2020 | None | | | |
| CN | 111234278 | A | 05 June 2020 | None | | | |
| CN | 103172891 | A | 26 June 2013 | None | | | |
| CN | 105944579 | A | 21 September 2016 | None | | | |
| JP | 2004139867 | A | 13 May 2004 | None | | | |
| TW | 201813993 | A | 16 April 2018 | TW | 202014449 | A | 16 April 2020 |
| | | | | KR | 20190087366 | A | 24 July 2019 |
| | | | | KR | 20190111854 | A | 02 October 2019 |
| | | | | JP | 2019014896 | A | 31 January 2019 |
| | | | | JP | 2018048307 | A | 29 March 2018 |
| | | | | KR | 20180030756 | A | 26 March 2018 |
| | | | | JP | 2020125493 | A | 20 August 2020 |
| | | | | KR | 20210107586 | A | 01 September 2021 |

Form PCT/ISA/210 (patent family annex) (January 2015)

**REFERENCES CITED IN THE DESCRIPTION**

**Patent documents cited in the description**

- CN 202111285297